# EUROPÄISCHE PATENTANMELDUNG

(11) **EP 4 538 715 A2**
(43) Veröffentlichungstag der Anmeldung: **16.04.2025**
(21) Anmeldenummer: 25153009.3
(22) Anmeldetag: 29.10.2020
(51) Int. Cl.: G01N 35/10

(54) **LABORSYSTEM**

(30) Priorität: 18.12.2019 DE 102019134846
(62) Teilanmeldung aus: 20803103.9
(71) Anmelder: Hamilton Bonaduz AG, 7402 Bonaduz (CH)
(72) Erfinder: WULFMEYER, Timo, 8853 Lachen (CH)
(74) Vertreter: Caspary, Karsten

(57) **Zusammenfassung**

Erfindungsgemäß umfasst ein Laborsystem (100) zum automatisierten Messen der Transmission von Proben (17) einen Probenbehälter (7) zur Aufnahme der Proben (17), und eine Transmissionsvorrichtung (9) zur Untersuchung wenigstens einer Probe (17) in dem Probenbehälter (7) mit einer Beleuchtungsvorrichtung (20) und einer Detektionsvorrichtung (30), wobei das Laborsystem (100) weiterhin ein Trägergehäuse und eine Transportvorrichtung (120) zum Transport des Probenbehälters (7) in x-, y- und z-Richtung in dem Trägergehäuse (1) umfasst, wobei die Transportvorrichtung (120) zum Transport in x-, y- und z-Richtung zumindest einer aus der Beleuchtungsvorrichtung (20) und der Detektionsvorrichtung (30) 20 eingerichtet ist, und wobei die Transmissionsvorrichtung (9) zweiteilig ausgestaltet ist, so dass die Beleuchtungsvorrichtung (20) und die Detektionsvorrichtung (30) mittels der Transportvorrichtung (120) trennbar und zusammensetzbar sind, wobei die Transmissionsvorrichtung (9) ein Oberteil (9a), das die Beleuchtungsvorrichtung (20) umfasst, und ein Unterteil (9b), das die Detektionsvorrichtung (30) umfasst, aufweist, wobei der Probenbehälter (7) zwischen Oberteil (9a) und Unterteil (9b) lichtdicht aufgenommen ist.

## Beschreibung

Die vorliegende Erfindung betrifft ein Laborsystem und ein Verfahren zum automatisierten Verarbeiten von Proben.

Der Bereich der personalisierten Medizin ist ein extrem schnell wachsender Markt, wodurch die Nachfrage nach der Entwicklung und Herstellung von hochwirksamen kundenspezifischen Medikamenten stark ansteigt. Die Herstellung derartiger Medikamente, die auch Biologika genannt werden, wird in zunehmendem Maße von umprogrammierten Mikroorganismen durchgeführt, wobei dieser Herstellungsprozess Bioreaktoren erforderlich macht, die exakt definierte Herstellungsbedingungen in Bezug auf Sauerstoffkonzentration, Temperatur, pH-Wert usw. liefern. Um in den Mikroorganismen Informationen über die Zelldichte zu erhalten, werden üblicherweise Absorptions- bzw. Transmissionsmessgeräte verwendet, die bisher als eigenständige Geräte während des Herstellungsprozesses verwendet werden.

Derartige Absorptionsmessgeräte sind seit vielen Jahren im Labor im Einsatz und werden von verschiedenen Firmen mit unterschiedlichen Funktionen angeboten. Solche eigenständigen Geräte sind jedoch schwer in einen automatisierten Herstellungsablauf, beispielsweise mittels Robotertechnik, einzubinden, weil die Geräte selbst groß, klobig, unflexibel und teuer sind.

Die DE 10 2018 111 033 A1 offenbart eine einteilige Transmissionsvorrichtung und ein Verfahren zur Untersuchung von Proben in Kavitäten einer Mikrotiterplatte mittels Transmission mit einer Beleuchtungsvorrichtung und einer Detektionsvorrichtung. Die Beleuchtungsvorrichtung weist eine Lichtquelle auf, deren Licht auf mehrere Teilstrahlengänge aufgeteilt und jeweils einer Detektoreinheit zugeleitet wird, die zusammen die Detektionsvorrichtung bilden. Die Mikrotiterplatte wird bei dem offenen Messaufbau ohne Verschlusselement seitlich in einen Zwischenraum zwischen Beleuchtungs- und Detektionsvorrichtung passgenau eingeschoben und daraus wieder entnommen bzw. per Auswurfvorrichtung ausgeworfen. Um zu verhindern, dass Umgebungslicht in die Transmissionsvorrichtung eintritt, weist die Detektionsvorrichtung einen winkelabhängigen Filter auf, der zwischen der Beleuchtungsvorrichtung und der Detektionsvorrichtung angeordnet ist und nur Lichtstrahlen durchlässt, deren Einfallswinkel kleiner als ein vorgegebener Grenzwinkel ist. Diese Konstruktion ohne Verschlusselement und mit winkelabhängigem Filter ist jedoch kompliziert und nicht zu 100 % effektiv.

Es ist daher die Aufgabe der vorliegenden Erfindung, ein Laborsystem bereit zu stellen, dessen Bestandteile die oben beschriebenen Nachteile zumindest teilweise überwinden, das in einen automatisierten Herstellungsprozess, vorzugsweise von Biologika, integriert werden kann, eine zügige Verarbeitung ermöglicht, einen einfachen und effektiven Aufbau aufweist und preisgünstig herzustellen ist. Eine weitere Aufgabe der vorliegenden Erfindung ist es, ein Verfahren zum automatisierten Verarbeiten von biologischen Proben bereitzustellen, das einen integrierten Herstellungsablauf vereinfacht und eine zuverlässige und schnelle Verarbeitung sicherstellt.

Diese Aufgabe wird durch die Gegenstände der unabhängigen Ansprüche 1 und 11 gelöst. Vorteilhafte Ausgestaltungen der Erfindung sind in den abhängigen Ansprüchen beschrieben.

Erfindungsgemäß umfasst ein Laborsystem, vorzugsweise ein Probenverarbeitungssystem, zum automatisierten Messen, vorzugsweise der Transmission, von vorzugsweise biologischen und/oder chemischen Proben ein Trägergehäuse, vorzugsweise ein Gehäuse, das einen Roboter aufweist, einen Probenbehälter, vorzugsweise eine Mikrotiterplatte, zur Aufnahme von, vorzugsweise biologischen und/oder chemischen, Proben und eine Transportvorrichtung zum Transport des Probenbehälters in dem Trägergehäuse. Das Laborsystem zeichnet sich dadurch aus, dass es weiterhin eine Messvorrichtung, vorzugsweise eine Transmissionsvorrichtung, zur Untersuchung wenigstens einer Probe in dem Probenbehälter, mit einer Beleuchtungsvorrichtung und einer Detektionsvorrichtung aufweist. Die Transportvorrichtung ist vorgesehen und angepasst zum Transport der Messvorrichtung als Ganzes, der Beleuchtungsvorrichtung, der Detektionsvorrichtung und/oder des Probenbehälters mittels Greifern, Klammern, Magneten, Saugern oder dergleichen. Die Messvorrichtung ist zweiteilig ausgebildet, so dass die Beleuchtungsvorrichtung und die Detektionsvorrichtung mittels der Transportvorrichtung bewegbar, mithin trennbar und zusammensetzbar, sind.

Mit dem erfindungsgemäßen Laborsystem werden die grundlegenden Voraussetzungen für eine automatisierte Verarbeitung von Proben in medizinischen oder pharmakologischen Laboren geschaffen, damit ein durchgehender, nahtloser Herstellungsprozess unter exakt definierten Bedingungen ermöglicht wird. Entscheidend dabei ist die Integration der Messvorrichtung unmittelbar in der (Arbeits-) Umgebung der automatisch steuerbaren Transportvorrichtung wie z. B. einer Pipettier-, Hebe- oder Greifvorrichtung. Bisher notwendige manuelle Eingriffe in den automatisierten Ablauf werden durch die Integration vermieden, wodurch eine erhebliche Zeit-und Kostenersparnis erzielt werden kann. Darüber hinaus ist das erfindungsgemäße Laborsystem platzsparend, leicht zu reinigen und reduziert den Wartungsaufwand, da über die notwendigen beweglichen Teile der Transportvorrichtung hinaus keine beweglichen Teile vorhanden sind. Eine flexible Verarbeitung durch die modulare Integration auf der Oberfläche des Laborsystems wird ebenfalls erzielt.

Mit besonderem Vorteil weisen die Beleuchtungsvorrichtung und die Detektionsvorrichtung jeweils zueinander passende und/oder komplementäre Verbindungsmittel auf, vorzugsweise zur Energie- und/oder zur Datenübertragung. Diese Art der passenden oder komplementären Verbindung ist wesentlich für die Integration der Messvorrichtung in das Laborsystem.

Dabei weisen die Verbindungsmittel bevorzugt eine mechanische Verbindung, zum Beispiel eine drahtgebundene Verbindung, oder eine induktive Verbindung zur Energieübertragung auf und eine mechanische, drahtlose und/oder optische Verbindung oder eine Kombination daraus zur Datenübertragung. Die mechanische Verbindung kann beispielsweise eine entsprechende elektrische Verbindung mittels Stecker und Buchse sein, wobei elektrische Kontakte in Stecker und Buchse für die Energie- und Datenübertragung sorgen. Die drahtlose Verbindung kann beispielsweise über NFC, RFID oder eine ähnliche drahtlose Kommunikationstechnologie realisiert werden.

Mit weiterem Vorteil weist die Beleuchtungsvorrichtung mindestens eine Lichtquelle, vorzugsweise mindestens eine LED, auf und ist dazu eingerichtet, von der Lichtquelle ausgesendetes Licht, vorzugsweise elektromagnetische Strahlung in einem Wellenlängenbereich von 10 nm bis 10000 nm, besonders bevorzugt im Bereich von 380 nm bis 800 nm, auf eine Mehrzahl von Teilstrahlen aufzuteilen, und umfasst eine Detektionsvorrichtung, die eine Mehrzahl von Detektoreinheiten aufweist und die dazu eingerichtet ist, das Licht der Teilstrahlen getrennt voneinander zu erfassen, wobei die Beleuchtungsvorrichtung und die Detektionsvorrichtung den Probenbehälter zur Untersuchung derart umgeben, dass der Probenbehälter lichtdicht von der Umgebung abgeschirmt ist. Diese Art von Messvorrichtung bietet bei dem erfindungsgemäßen Laborsystem entscheidende Vorteile gegenüber bisherigen Laborsystemen, nämlich die vollständige Integration zusammen mit der Transportvorrichtung. Zusätzliche Schließmechanismen entfallen, ebenso kann auf winkelabhängige Filtereinrichtungen verzichtet werden, wobei dennoch eine zuverlässige Lichtdichtheit vor dem Umgebungslicht gegeben ist.

Mit besonderem Vorteil weist die Messvorrichtung ein als Deckel ausgebildetes Oberteil, das die Beleuchtungsvorrichtung umfasst, und ein Unterteil auf, das die Detektionsvorrichtung umfasst. Der Probenbehälter kann zwischen Oberteil und Unterteil lichtdicht aufgenommen sein. Dazu kann die Transportvorrichtung bevorzugt dazu eingerichtet sein, den Probenbehälter passgenau und mit höherer Geschwindigkeit in die Messvorrichtung einzusetzen und wieder herauszunehmen als dies bei bisherigen Laborsystemen der Fall ist. Damit ist eine besonders einfache Handhabung der Messvorrichtung möglich, weil die Transportvorrichtung das Positionieren des Probenbehälters und der Komponenten der Messvorrichtung mit wenigen Bewegungen ausführen kann, die einfach von einer Steuereinrichtung aus automatisiert gesteuert werden können. Eine Steuerung mittels zusätzlicher Bauteile kann entfallen und Platz dafür wird eingespart.

Vorzugsweise ist zwischen Beleuchtungsvorrichtung und Detektionsvorrichtung ein Aufnahmeraum ausgebildet, der dazu eingerichtet ist, den Probenbehälter aufzunehmen, vorzugsweise passgenau. Dies vereinfacht die Handhabung der Bestandteile, weil beispielsweise auf zusätzliche Positionierungsüberprüfungen und -maßnahmen verzichtet werden kann. Der Messvorgang kann so unmittelbar nach dem Einsetzen des Probenbehälters und dem Verschließen der Messvorrichtung begonnen werden. Dabei ist es vorteilhaft, wenn Oberteil und Unterteil zumindest abschnittsweise zueinander komplementäre Formen aufweisen, die beim Zusammensetzen eine Selbstzentrierung bewirken. Hierbei können auch magnetische Mittel, z. B. Neodym-Magnete, verwendet werden.

Weiterhin bevorzugt ist, dass die Messvorrichtung Mittel zum Ausschluss von Umgebungslicht, vorzugsweise Blenden, Dichtungen oder Klappen und dergleichen aufweist. Dadurch wird die Lichtdichtheit mit einfachen Mitteln ohne zusätzlichen Platzbedarf auf dem Deck des Laborsystems weiter erhöht.

Mit weiterem Vorteil ist die Detektionsvorrichtung dazu eingerichtet, das Licht jedes der Teilstrahlen gleichzeitig zu erfassen. Dies ermöglicht eine enorme Zeitersparnis gegenüber einer sequentiellen Messung und dadurch eine größere Benutzerfreundlichkeit sowie geringe Kosten. Auch kann hier ein winkelabhängiger Filter an der Detektionsvorrichtung angebracht sein, um einzelne Detektoren von Streulicht von benachbarten, zu messenden Proben zu isolieren.

Das erfindungsgemäße Verfahren zum automatisierten Verarbeiten von biologischen Proben weist folgende Schritte auf: Bereitstellen eines Laborsystems, vorzugsweise ein Probenverarbeitungssystem, mit einem Trägergehäuse, vorzugsweise ein Trägergehäuse für Robotikanwendungen, einem Probenbehälter, vorzugsweise eine Mikrotiterplatte, zur Aufnahme von vorzugsweise biologischen und/oder chemischen Proben und einer Transportvorrichtung zum Transport des Probenbehälters in dem Trägergehäuse; Bereitstellen einer Messvorrichtung zur Untersuchung wenigstens einer Probe in dem Probenbehälter mit einer Beleuchtungsvorrichtung und einer Detektionsvorrichtung, wobei die Transportvorrichtung zum Transport der Messvorrichtung als Ganzes, der Beleuchtungsvorrichtung, der Detektionsvorrichtung und/oder des Probenbehälters mittels Greifern, Klammern, Magneten, Saugern oder dergleichen eingerichtet ist und wobei die Messvorrichtung zweiteilig ausgestattet ist, so dass die Beleuchtungsvorrichtung und die Detektionsvorrichtung mittels der Transportvorrichtung bewegbar, vorzugsweise trennbar und zusammensetzbar sind, wobei die Beleuchtungsvorrichtung mindestens eine Lichtquelle aufweist und dazu eingerichtet ist, von der Lichtquelle ausgesendetes Licht auf eine Mehrzahl von Teilstrahlen aufzuteilen, und wobei die Detektionsvorrichtung eine Mehrzahl von Detektoreinheiten aufweist und dazu eingerichtet ist, das Licht der Teilstrahlen getrennt voneinander zu erfassen; Öffnen der Messvorrichtung, bevorzugt mittels der Transportvorrichtung, vorzugsweise so, dass die Beleuchtungsvorrichtung von der Detektionsvorrichtung entfernt wird; Anordnen des Probenbehälters, bevorzugt mittels der Transportvorrichtung, im Bereich, vorzugsweise im Messbereich, der Messvorrichtung, so dass die Messvorrichtung die Messung der Proben durchführen kann, vorzugsweise indem der Probenbehälter auf der Detektionsvorrichtung abgelegt wird; Verschließen der Messvorrichtung, vorzugsweise so, dass der Probenbehälter lichtdicht von der Umgebung abgeschirmt ist, vorzugsweise indem die Beleuchtungsvorrichtung auf der Detektionsvorrichtung abgelegt wird; Durchführen der Messung der Proben des Probenbehälters; vorzugsweise erneutes Öffnen der Messvorrichtung, vorzugsweise durch erneutes Entfernen der Beleuchtungsvorrichtung von der Detektionsvorrichtung, bevorzugt mittels der Transportvorrichtung; und vorzugsweise Anordnen des Probenbehälters mittels der Transportvorrichtung an einem vorbestimmten Ort des Laborsystems, vorzugsweise innerhalb des Trägergehäuses. Für das Verfahren gelten im Wesentlichen dieselben Vorteile wie für das Laborsystem selbst; insbesondere ermöglicht das Verfahren eine Zeit- und Kostenersparnis sowie eine erhöhte Flexibilität der Verarbeitung von Proben z. B. während eines Analyse- oder Herstellungsprozesses.

Bevorzugt umfasst das Durchführen der Messung die Schritte: Erzeugen von Licht mittels der Lichtquelle während eines ersten Zeitraums, Aufteilen des emittierten Lichts in die Mehrzahl von Teilstrahlengängen, die der Mehrzahl von Detektoreinheiten der Detektionsvorrichtung und der Anzahl von Proben entspricht, und separates und gleichzeitiges Erfassen des von jeder Probe transmittierten Lichts in jeder Detektoreinheit. Insbesondere ist es vorteilhaft, wenn das Licht in der Beleuchtungsvorrichtung auf Teilstrahlengänge, vorzugsweise sechsundneunzig Teilstrahlengänge, aufgeteilt wird, und wobei während des ersten Zeitraums das Licht der sechsundneunzig Teilstrahlengänge durch eine korrespondierende Anzahl von Detektoreinheiten, vorzugsweise von sechsundneunzig Detektoreinheiten, separat gemessen wird. Auch eine andere Anzahl beziehungsweise eine größere Anzahl von Teilstrahlengängen und Detektoreinheiten wie z. B. 192 (12 x 16) und 384 (16 x 24) oder mehr sind je nach vorhandenem Platz auf der Grundplatte des Laborsystems möglich. Die Analyse wird dadurch beschleunigt.

Mit weiterem Vorteil stellen die während eines ersten Zeitraums gemessenen Lichtsignale eine Lichtmessung dar, wobei während eines zweiten Zeitraums kein Licht in die Mehrzahl von Teilstrahlengängen emittiert wird und die während des zweiten Zeitraums in den Detektoreinheiten separat gemessenen Lichtmessungen eine Dunkelmessung darstellen, wobei für jede Detektoreinheit die Dunkelmessung von der Lichtmessung subtrahiert wird. Die Dunkelmessung dient im Wesentlichen dazu, jede Analyse in der Messvorrichtung möglichst zuverlässig zu machen, weil bei jeder Analyse quasi eine Kalibrierung der Messvorrichtung durchgeführt wird. Systematische Fehler werden dadurch schnell erkannt und entsprechend ausgeschlossen. Besonders vorteilhaft ist dabei, wenn mehrere Messzyklen durchlaufen werden, wobei in jedem Messzyklus wenigstens eine Lichtmessung und wenigstens eine Dunkelmessung durchgeführt und in einem Messzyklus von jeder gemessenen Lichtmessung die von derselben Detektoreinheit gemessene Dunkelmessung subtrahiert wird.

Bevorzugt emittiert die Lichtquelle Licht einer Mehrzahl von Wellenlängen, die mittels unterschiedlicher Leuchtdioden erzeugt werden, z. B. Wellenlängen von 405 nm, 450 nm, 540 nm und 630 nm. Die Wellenlängen sind nicht auf die angegebenen Werte beschränkt, sondern können je nach Anforderung der Analyse ausgewählt und angepasst werden. Die Auswahl und Anpassbarkeit der Wellenlängen erhöht die Flexibilität der Probenverarbeitung wesentlich, da beispielsweise mehrere Messungen bei unterschiedlichen Wellenlängen kurz hintereinander durchgeführt werden können, ohne den Messaufbau zu verändern. Mit anderen Worten sind die unterschiedlichen Wellenlängenmessungen in der Software der Steuereinrichtung einstellbar.

Diese und weitere Vorteile der vorliegenden Erfindung ergeben sich aus der nachfolgenden Darstellung und Beschreibung von bevorzugten Ausführungsformen anhand der Figuren, in denen:
- Fig. 1: eine perspektivische Ansicht von Bestandteilen einer bevorzugten Ausführungsform des erfindungsgemäßen Laborsystems zeigt;
- Fig. 2: eine perspektivische Explosionsansicht einer Messvorrichtung gemäß einer bevorzugten Ausführungsform des erfindungsgemäßen Laborsystems zeigt;
- Fig. 3: eine perspektivische Ansicht der Beleuchtungsvorrichtung der Messvorrichtung aus Fig. 2 zeigt;
- Fig. 4: eine perspektivische Ansicht der Detektionsvorrichtung der Messvorrichtung aus Fig. 2 zeigt;
- Fig. 5: eine perspektivische Ansicht des Innenlebens der Beleuchtungsvorrichtung gemäß einer bevorzugten Ausführungsform zeigt;
- Fig. 6: einen Teilausschnitt einer zweiten bevorzugten Ausführungsform des erfindungsgemäßen Laborsystems in einer ersten Stellung zeigt;
- Fig. 7: einen Teilausschnitt der zweiten bevorzugten Ausführungsform des erfindungsgemäßen Laborsystems in einer zweiten Stellung zeigt;
- Fig. 8: einen Teilausschnitt der zweiten bevorzugten Ausführungsform des erfindungsgemäßen Laborsystems in einer dritten Stellung zeigt;
- Fig. 9: einen Teilausschnitt der zweiten bevorzugten Ausführungsform des erfindungsgemäßen Laborsystems in einer vierten Stellung zeigt;

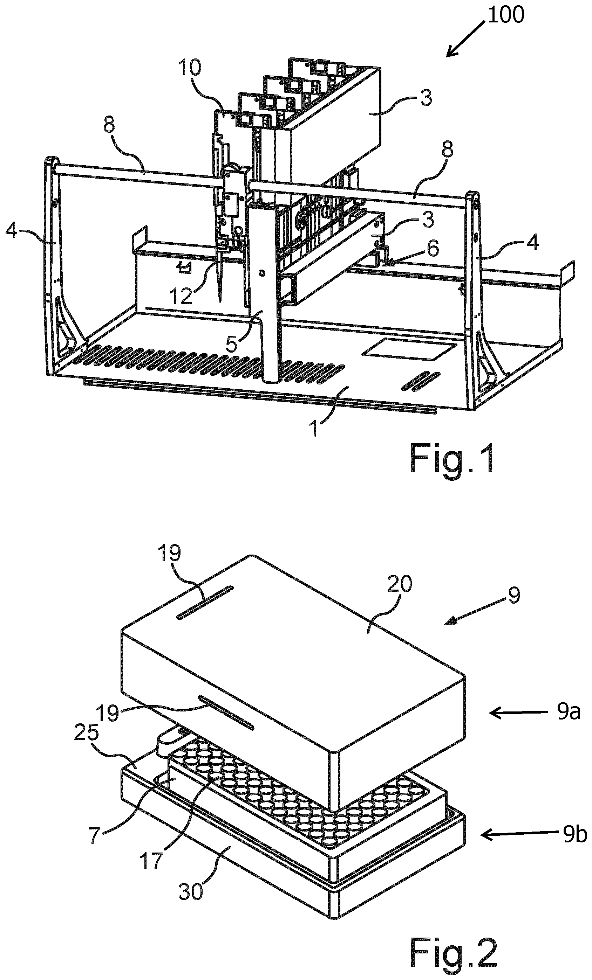

Fig. 1 zeigt eine perspektivische Ansicht von Bestandteilen einer ersten bevorzugten Ausführungsform des erfindungsgemäßen Laborsystems 100, wobei die Messvorrichtung und die Transportvorrichtung weggelassen sind. Auf einer im Wesentlichen rechteckigen Grundplatte 1 ist an den Stirnseiten jeweils eine Trägerstütze 4 angeordnet, deren freies Ende ein stangenartiger Träger 8 miteinander verbindet. An der rückwärtigen Längsseite der Grundplatte 1 ist ein Rückenteil 2 befestigt, das im Wesentlichen senkrecht zur Grundplatte 1 angeordnet ist und an seinem oberen Ende im Wesentlichen parallel zur Grundplatte 1 eine schienenartige Konstruktion 6 aufweist, auf der ein Aufbau horizontal beweglich angeordnet ist, der hier zwei horizontale Tragarme 3 sowie einen vertikalen Tragarm 5 aufweist. Die oben definierten Trägerbestandteile bilden ein Trägergehäuse.

An dem Aufbau sind hintereinander an einem der horizontalen Tragarme 3 eine Mehrzahl von Pipettiereinheiten 10 gleichmäßig voneinander beabstandet angeordnet, die sich im Wesentlichen senkrecht und damit parallel zu den Trägerstützen 4 erstrecken und in ihrem unteren Bereich einen Pipettierkanal 12 aufweisen, wobei in Fig. 1 lediglich ein Pipettierkanal 12 sichtbar ist. Der Aufbau umfasst mehrere entsprechende, vorzugsweise elektrische Antriebseinrichtungen und eine entsprechende Mechanik, die dafür sorgen, dass der Aufbau eine automatisiert gesteuerte Bewegung der Pipettiereinheiten in einer Ebene parallel zur Grundplatte 1, also in X- und Y-Richtung, sowie eine ebenfalls automatisiert gesteuerte vertikale Bewegung des Pipettierkanals 12 an jeder Pipettiereinheit 10 ermöglicht. Eine ausführliche Erläuterung des grundsätzlichen Aufbaus sowie der Funktion einer derartigen Pipettiervorrichtung ist beispielsweise in der EP 2 957 917 A1 oder auch alternativ in der WO 2013/174961 A2 beschrieben.

Für die in Fig. 1 nicht dargestellte Transportfunktion des erfindungsgemäßen Laborsystems 100 ist ein zweiter, ähnlich wie der dargestellte Pipettieraufbau konstruierter Greif- bzw. Transportaufbau vorgesehen, der ebenfalls auf der schienenartigen Konstruktion 6 und dem stangenartigen Träger 8 befestigt ist und mindestens eine Transportvorrichtung aufweist, die wie die dargestellte Pipettiervorrichtung in X-, Y- und Z-Richtung über der Grundplatte 1 bewegbar ist, so dass auf der Grundplatte 1 und im Raum darüber befindliche Objekte mittels der Transportvorrichtung aufgenommen, bewegt und wieder abgelegt werden können. Hinsichtlich der Einzelheiten der Transportvorrichtung wird auf die beiden oben im Zusammenhang mit der Pipettiervorrichtung genannten Druckschriften verwiesen.

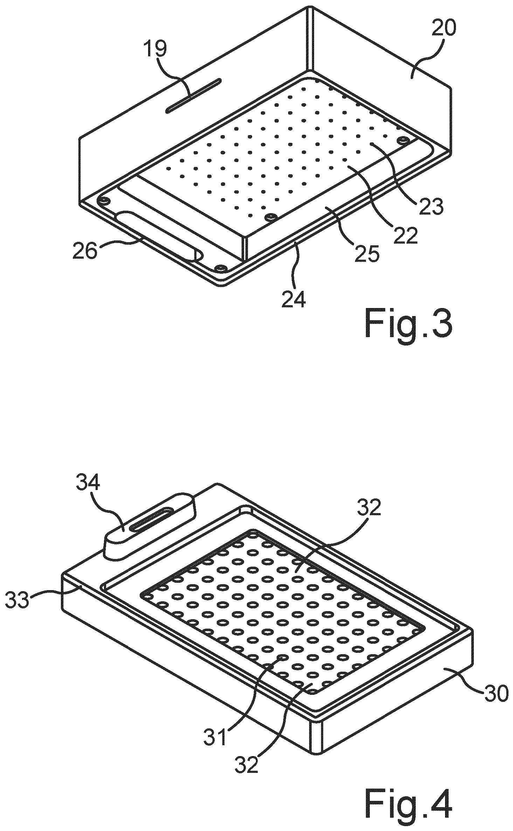

Fig. 2 zeigt eine perspektivische Explosionsansicht einer Messvorrichtung 9 gemäß einer bevorzugten Ausführungsform des erfindungsgemäßen Laborsystems 100. Die Messvorrichtung 9 weist eine Beleuchtungsvorrichtung 20, die als ein quaderförmiges Oberteil 9a bzw. als Deckel ausgebildet ist, und eine Detektionsvorrichtung 30, die als ein Unterteil 9b der Messvorrichtung 9 ausgebildet ist, mit einem dazwischen liegenden Aufnahmeraum 25 auf, in dem in der hier dargestellten Ausführungsform ein Probenbehälter 7 angeordnet ist, der als Mikrotiterplatte mit einer Mehrzahl von Kavitäten 17 ausgebildet ist. Die obere Fläche und eine Seitenfläche der Beleuchtungsvorrichtung 20 weisen Leuchtelemente 19 auf, die den Zustand der Messvorrichtung 9 optisch anzeigen können. Insbesondere ist es damit möglich, bestimmte Zeitpunkte und Einstellungen beim Ablauf einer Messung mittels der Messvorrichtung 9 anzuzeigen. Man erkennt in Fig. 2, dass die Beleuchtungsvorrichtung 20 und die Detektionsvorrichtung 30, also Oberteil 9a und Unterteil 9b der Messvorrichtung 9, eine komplementäre Form derart aufweisen, dass bei zusammengesetzter Messvorrichtung 9 diese einen Quader bildet, dessen Seitenflächen im Wesentlichen nahtlos aneinander anschließen, wobei kein Umgebungslicht an den jeweiligen Stoßflächen von außen in die Messvorrichtung 9 eindringen kann. Näheres wird unten unter Bezugnahme auf die Fig. 3 und 4 beschrieben.

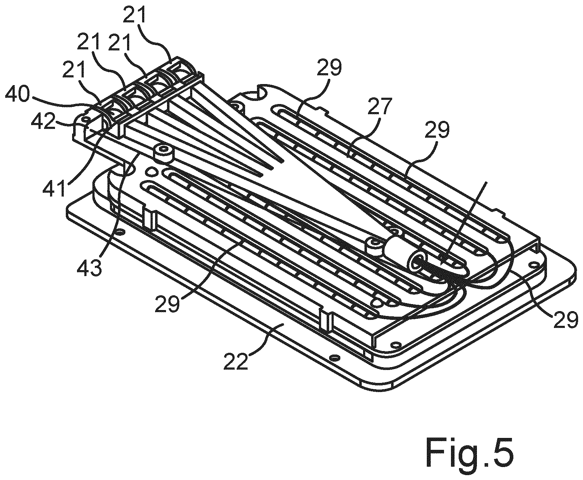

Fig. 3 ist eine perspektivische Ansicht der Beleuchtungsvorrichtung 20 der Transmissionsvorrichtung 9 aus Fig. 2 mit Blickwinkel von unten, so dass Teile des Inneren der Beleuchtungsvorrichtung 20 sichtbar sind. Zentrales Element der Beleuchtungsvorrichtung 20 im Inneren ist eine Halteplatte 22, die eine Mehrzahl von Öffnungen 23 aufweist, die in der hier dargestellten Ausführungsform äquidistant über die Fläche der Halteplatte 22 angeordnet sind. Die Öffnungen 23 dienen dazu, dass von einer Lichtquelle hinter der Halteplatte 22 erzeugtes Licht senkrecht durch die Öffnungen 23 nach unten hindurch tritt und somit in Richtung des Probenbehälters 7 beziehungsweise der Detektionseinheiten 31 der Detektionsvorrichtung 30 geleitet wird, wie in Bezug auf Fig. 5 unten noch näher erläutert ist.

In Fig. 3 ist weiterhin erkennbar, dass eine Randkontur 24 das offene Ende der Beleuchtungsvorrichtung 20 umfänglich umgibt, wobei der äußere Rand der Randkontur 24 den unteren Rand bildet. Weiterhin ist im linken Bereich in Fig. 3 eine längliche Ausnehmung 26 vorhanden, in die ein dazu passender Vorsprung 34 der Detektionsvorrichtung 30 eingesteckt werden kann, wie in Zusammenschau der Fig. 3 und 4 ersichtlich ist. Ausnehmung 26 und Vorsprung 34 sind als komplementäre Verbindungsmittel ausgebildet und können auch als weibliches bzw. männliches Steckerteil bezeichnet werden, die mit entsprechenden elektrischen Leitungsenden und -aufnahmen ausgerüstet sind, so dass entsprechende elektrische bzw. Datensignale zwischen der Beleuchtungsvorrichtung 20 und der Detektionsvorrichtung 30 in wechselseitiger Richtung ausgetauscht werden können. In der dargestellten Ausführungsform sind die Verbindungsmittel 26, 34 mechanischer Ausprägung, wobei auch eine elektrische Verbindung zwischen den Bestandteilen über entsprechende elektrische Kontakte innerhalb der Steckerteile hergestellt wird. Über diese Verbindungsmittel 26, 34 kann demnach eine Datenübertragung und auch eine Energieübertragung durchgeführt werden. Grundsätzlich ist es ebenfalls denkbar, dass die Verbindungsmittel nicht drahtgebunden, sondern drahtlos ausgeführt sind. Beispiele hierfür sind RFID, NFC, magnetische Verbindungen oder andere drahtlose Daten- und Energieübertragungstechnologien.

Fig. 4 zeigt eine perspektivische Ansicht der Detektionsvorrichtung 30 der Messvorrichtung 9 aus Fig. 2, wobei hier im Gegensatz zur Fig. 2 kein Probenbehälter 7 innerhalb der Detektionsvorrichtung 30 angeordnet ist. Die Detektionsvorrichtung 30 weist im zentralen Bereich eine Detektorplatte 32 auf, die eine Mehrzahl von gleichmäßig angeordneten Detektoreinheiten 31 umfasst. Eine Randkontur 33 umgibt die Detektionsvorrichtung 30 derart, dass sie komplementär zur Randkontur 24 der Beleuchtungsvorrichtung 20 ausgebildet ist, so dass beim Aufeinandersetzen der Beleuchtungsvorrichtung 20 auf die Detektionsvorrichtung 30 ein möglichst lichtdichtes, quaderförmiges Gebilde entsteht. Zur Optimierung der lichtdichten Verbindung zwischen Oberteil 9a und Unterteil 9b können Mittel vorgesehen sein, die ein Eindringen von Umgebungslicht weiter verhindert wie z. B. Dichtungen, Klappen, Blenden oder dergleichen. Auch können die Stirn- bzw. Randflächen Verbindungsmittel aufweisen, die ein passendes Aufsetzen und eine Zentrierung von Ober- und Unterteil 9a, 9b unterstützen wie z. B. komplementär ausgestattete Konturen, magnetische bzw. metallische Körper.

Fig. 5 zeigt eine perspektivische Ansicht des Innenlebens der Beleuchtungsvorrichtung 20 gemäß der bevorzugten Ausführungsform des erfindungsgemäßen Laborsystems 100. Die in Fig. 5 gewählte Ansicht entspricht im Wesentlichen der Ansicht aus Fig. 1, wobei sozusagen das Gehäuse oder die Abdeckung der Beleuchtungsvorrichtung 20 weggelassen ist und so der innere Aufbau sichtbar wird. Auf der Halteplatte 22, die man in Fig. 3 in der Ansicht von unten erkennt, sind in Fig. 5 die Komponenten angeordnet, die für die Lichterzeugung und Lichtverteilung sorgen. Eine Emissionsquelle weist vier Lichtquellen 21 auf, die in der dargestellten Ausführungsform als Leuchtdioden ausgebildet sind, deren Wellenlängen beispielsweise 405 nm, 450 nm, 540 nm und 630 nm betragen. Durch das Vorsehen von mehreren Lichtquellen mit unterschiedlichen Wellenlängen wird es möglich, unterschiedliche Untersuchungen mit ein und derselben Messvorrichtung 9 durchzuführen. Direkt hinter den Lichtquellen beziehungsweise Leuchtdioden 21 ist jeweils eine Kugellinse 40 angeordnet, die das austretende Licht parallelisiert. Hinter jeder Kugellinse 40 ist jeweils ein Interferenzfilter 41 angeordnet, der das Wellenlängenspektrum des emittierten Lichts der Leuchtdioden 21 einschränkt. Direkt im Anschluss an den Interferenzfilter 41 können weitere Kugellinsen angeordnet sein, die das Licht weiter fokussieren.

Anschließend an die Interferenzfilter 41 ist ein Lichtmischer 27 angeordnet, der das von den Lichtquellen 21 emittierte Licht homogenisiert, damit sich im Querschnitt des Lichtmischers 27 das Licht mit gleichmäßiger Intensität verteilt. Dazu weist der Lichtmischer 27 gemäß der dargestellten Ausführungsform bevorzugt einen rechteckigen Querschnitt auf. Ist nur eine einzige Lichtquelle 21 bzw. Leuchtdiode vorgesehen, so hat der Lichtmischer 27 beispielsweise die Form eines Stabes mit rechteckigem Querschnitt. Bei mehreren Lichtquellen bzw. Leuchtdioden 21, wie in Fig. 5 gezeigt, führt der Lichtmischer 27 das Licht der Lichtquellen 21 in vier Lichtkanälen mit rechteckigem Querschnitt zusammen. Alternativ kann der Lichtmischer 27 eine dreieckige Grundfläche aufweisen, bei der im Vergleich zu der in Fig. 5 gezeigten Ausführungsform die Fläche zwischen den Armen bzw. den einzelnen Lichtkanälen ausgefüllt ist.

Das vom Lichtmischer 27 zusammengeführte Licht wird an dessen Ende in Teilstrahlengänge 28 aufgeteilt. Dazu ist ein Bündel von Lichtleitern 29 vorgesehen, in die jeweils ein Anteil des Lichts gleichmäßig eingekoppelt wird. Jeder einzelne Lichtleiter, der beispielsweise als Polymer-Optische-Faser (POF) ausgebildet sein kann, führt zu einer Öffnung 23, in denen jeweils zur weiteren Fokussierung des Lichts eine nicht gezeigte Kugellinse angeordnet ist. Im in Fig. 5 dargestellten Ausführungsbeispiel weist ein Bündel von Lichtleitern 26 zwölf einzelne Lichtleiter 26 auf, die hintereinander zu den in einer Reihe liegenden Öffnungen 23 geführt werden. Ein optional vorhandener weiterer Lichtleiter 43 führt als Referenzstrahlengang 43 zurück zu einer Referenzdetektoreinheit 42, die neben den Lichtquellen 21 angeordnet ist. Mittels dieser optionalen Referenzdetektoreinheit 42 lässt sich die Alterung der Lichtquellen beziehungsweise Leuchtdioden 21 und/oder eine Veränderung der Intensität des von der Lichtquelle 21 emittierten Lichts untersuchen.

In Zusammenschau der Fig. 2 bis 5 verlaufen die Teilstrahlengänge 28 jeweils ausgehend von dem Lichtmischer 27 durch einen Lichtleiter 29, die jeweils exakt zu einer Öffnung 23 in der Halteplatte 22 geführt werden. Vor bzw. in der Öffnung 23 wird das jeweilige Licht mittels einer (nicht dargestellten) Kugellinse gebündelt bzw. fokussiert und tritt danach in den Aufnahmeraum 25 ein. Im Aufnahmeraum 25 ist der Probenbehälter 7 mit den exakt ausgerichteten Proben 17 derart angeordnet, dass jedem aus einer Öffnung 23 austretenden Lichtstrahl eine Probe 17 unmittelbar gegenüber liegt, in die das Licht eindringt und an dessen Boden es wieder austritt. Direkt unterhalb des Probenbehälters 7 wiederum liegt den Proben die Detektionsvorrichtung 30 mit den Detektoreinheiten 31 gegenüber, die wiederum exakt so angeordnet sind, dass das transmittierte Licht pro Probe 17 in jeder einzelnen Detektoreinheit 31 erfasst werden kann. In der hier dargestellten Ausführungsform weist der Probenbehälter 7 sechsundneunzig Proben oder Kavitäten 17 auf, dementsprechend umfasst die Beleuchtungsvorrichtung 20 sechsundneunzig Öffnungen 23 und die Detektionsvorrichtung 30 sechsundneunzig Detektoreinheiten 31.

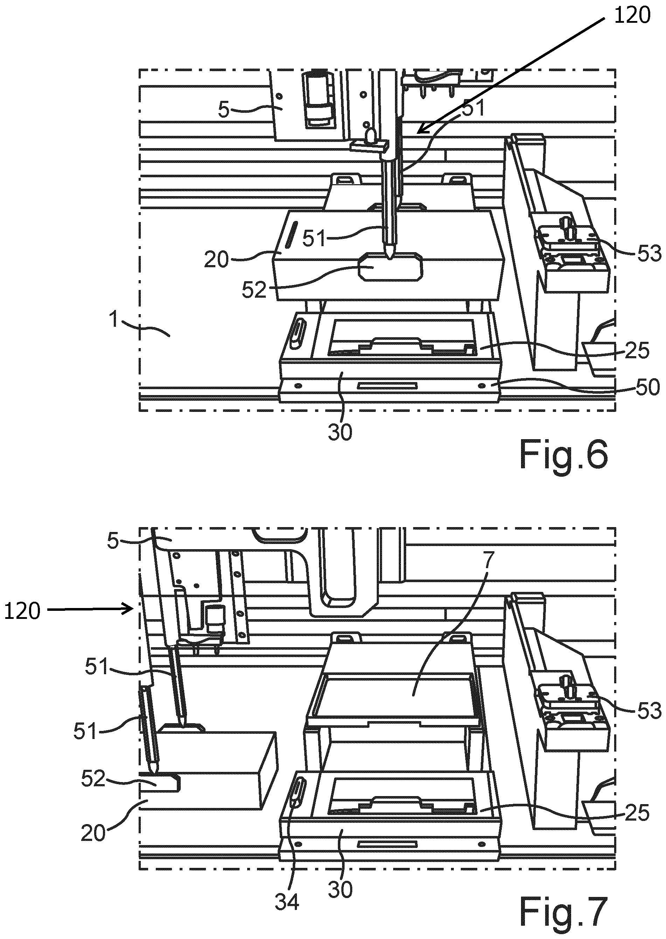

Mit Bezugnahme auf die Fig. 6 bis 9 werden nun das erfindungsgemäße Verfahren sowie weitere Vorteile des erfindungsgemäßen Laborsystems 100 beschrieben. Die Fig. 6 bis 9 zeigen jeweils einen Ausschnitt einer weiteren bevorzugten Ausführungsform des erfindungsgemäßen Laborsystems 100 in unterschiedlichen Zuständen. In Fig. 6 erkennt man die Detektionsvorrichtung 30 auf der Grundplatte 1, wobei dazwischen eine Bodenplatte 50 angeordnet ist, die zur Fixierung der Detektionsvorrichtung 30 dient. Die Position der Detektionsvorrichtung 30 auf der Grundplatte 1 ist im Wesentlichen beliebig, zur besseren Sichtbarkeit ist hier eine Position am vorderen Rand der Grundplatte 1 gewählt. Direkt oberhalb der Detektionsvorrichtung 30 befindet sich die Beleuchtungsvorrichtung 20, die zwischen zwei Greifspitzen 51 gehalten ist, an deren Enden sich jeweils ein Greifelement 52 befindet. Die Greifspitzen 51 und Greifelemente 52 sind Bestandteile der Transportvorrichtung 120, die am vertikalen Tragarm 5 angeordnet ist. Die Greifspitzen 51 sind dazu eingerichtet, auch andere Elemente innerhalb des Laborsystems 100 zu fassen, für die hier vorgestellte Funktion sind die Greifspitzen 51 mit den Greifelementen 52 ausgestattet, die sie zuvor von der Greifelementlagerung 53 abgenommen haben. Wie im Wesentlichen alle Vorgänge innerhalb des Laborsystems 100 verläuft auch das Aufnehmen der Greifelemente 52 automatisiert, d. h. es wird von der (nicht dargestellten) Steuereinrichtung per Software gesteuert.

Zwischen den Greifspitzen 51 bzw. Greifelementen 52 gehalten wird die Beleuchtungsvorrichtung 20, die gerade von der Detektionsvorrichtung 30 abgenommen und etwas angehoben wurde. Der Aufnahmeraum 25 zwischen Beleuchtungsvorrichtung 20 und Detektionsvorrichtung 30 ist in Fig. 6 leer.

Fig. 7 zeigt den Zustand des erfindungsgemäßen Laborsystems 100 nach dem nächsten Schritt in einer zweiten Stellung, nämlich dem Ablegen der Beleuchtungsvorrichtung 20 auf der Grundplatte 1 durch die Transportvorrichtung 120. Dabei ist die Beleuchtungsvorrichtung 20 noch zwischen den Greifspitzen 51 gehalten. Ebenfalls in Fig. 7 erkennt man den Probenbehälter 7, der etwas hinter und oberhalb der Detektionsvorrichtung 30 angeordnet und für die Messung durch die Transmissionsvorrichtung 9 bereits vorbereitet ist.

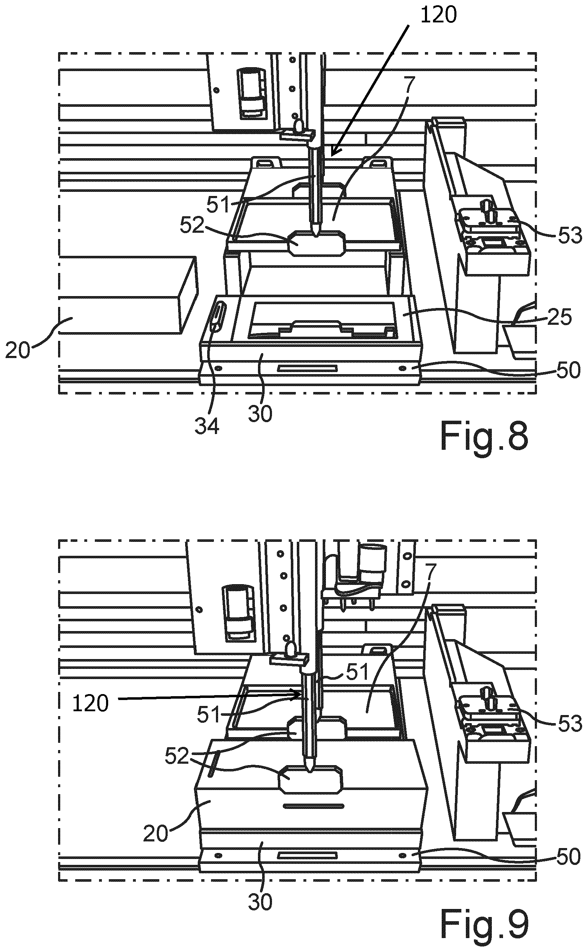

In Fig. 8 ist ein weiterer Zustand bzw. eine weitere, dritte Stellung des erfindungsgemäßen Laborsystems 100 dargestellt, bei dem die Transportvorrichtung 120 nunmehr den Probenbehälter 7 aufgenommen und etwas angehoben hat. Der Probenbehälter 7 kann ebenfalls mit den Greifelementen 52 geklemmt werden. Grundsätzlich ist es nicht notwendig, dieselben Greifelemente während des gesamten Prozesses zu verwenden, es kann auch vorkommen, dass die Transportvorrichtung 120 zur Greifelementlagerung 53 fährt und dort einen Austausch der Greifelemente 52 vornimmt. In der in Fig. 8 dargestellten dritten Position ist nun der Probenbehälter 7 direkt oberhalb der Detektionsvorrichtung 30 angeordnet, so dass die Transportvorrichtung 120 lediglich mit den Greifspitzen 51 nach unten, d. h. in z-Richtung, fahren muss, um den Probenbehälter 7 exakt auf der Detektionsvorrichtung 30 abzulegen. Im linken Bereich der Fig. 8 ist die auf der Grundplatte 1 abgelegte Beleuchtungsvorrichtung 20 erkennbar.

In Fig. 9 ist der nächste Zustand des erfindungsgemäßen Laborsystems 100 dargestellt, bei dem die Transportvorrichtung 120 nunmehr die Beleuchtungsvorrichtung 20 von der Grundplatte 1 aufgenommen, angehoben und bereits auf der Detektionsvorrichtung 30 positioniert hat. Die Greifelemente 52 sind bereits etwas vertikal nach oben gefahren und haben sich damit von dem Gehäuse der Beleuchtungsvorrichtung 20 gelöst. Die Beleuchtungsvorrichtung 20 ist nunmehr lichtdicht auf der Detektionsvorrichtung 30 positioniert, wobei kein Umgebungslicht von außen an den aufeinandergelegten Stirnflächen der jeweiligen Bestandteile eindringen kann. In diesem Zustand kann nun die Messung stattfinden, die bereits oben beschrieben wurde.

Nach erfolgter Messung durch die Messvorrichtung 9 kann die Transportvorrichtung 120 die Beleuchtungsvorrichtung 20 wieder von der Detektionsvorrichtung 30 abheben und in den Zustand gelangen, der in Fig. 6 dargestellt ist mit dem Unterschied, dass dort sich kein Probenbehälter 7 im Aufnahmeraum 25 befindet. Anschließend kann die Transportvorrichtung 120 nach Ablage der Beleuchtungsvorrichtung 20 auf der Grundplatte 1 den Probenbehälter 7 aufnehmen und zu seinem nächsten Bestimmungsort transportieren. Danach kann entweder der nächste Probenbehälter 7 in die Messvorrichtung 9 eingesetzt werden wie oben beschrieben oder die Messvorrichtung 9 kann durch Aufsetzen der Beleuchtungsvorrichtung 20 auf die Detektionsvorrichtung 30 wieder verschlossen werden.

Mit dem erfindungsgemäßen Gegenstand wurde ein Laborsystem 100 und ein Verfahren zum automatisierten Verarbeiten von Proben bereitgestellt, das in einen automatisierten Herstellungsprozess von Biologika integriert werden kann, einen einfachen und platzsparenden Aufbau aufweist und preisgünstig herzustellen ist.

## Patentansprüche

1. Laborsystem (100) zum automatisierten Messen von Proben (17) mit
einem Probenbehälter (7) zur Aufnahme der Proben (17), und
einer Transmissionsvorrichtung (9) zur Untersuchung wenigstens einer Probe (17) in dem Probenbehälter (7) mit einer Beleuchtungsvorrichtung (20) und einer Detektionsvorrichtung (30),
wobei
das Laborsystem (100) weiterhin ein Trägergehäuse und eine Transportvorrichtung (120) zum Transport des Probenbehälters (7) in x-, y- und z-Richtung in dem Trägergehäuse (1) umfasst,
wobei die Transportvorrichtung (120) zum Transport in x-, y- und z-Richtung zumindest einer aus der Beleuchtungsvorrichtung (20) und der Detektionsvorrichtung (30) eingerichtet ist, und
wobei die Transmissionsvorrichtung (9) zweiteilig ausgestattet ist, so dass die Beleuchtungsvorrichtung (20) und die Detektionsvorrichtung (30) mittels der Transportvorrichtung (120) trennbar und zusammensetzbar sind, und
wobei die Transmissionsvorrichtung (9) ein Oberteil (9a), das die Beleuchtungsvorrichtung (20) umfasst, und ein Unterteil (9b), das die Detektionsvorrichtung (30) umfasst, aufweist, wobei der Probenbehälter (7) zwischen Oberteil (9a) und Unterteil (9b) lichtdicht aufgenommen ist.

2. Laborsystem (100) nach Anspruch 1, **dadurch gekennzeichnet, dass** die Transportvorrichtung (120) zum Transport der Transmissionsvorrichtung (9) als Ganzes vorgesehen und angepasst ist.

3. Laborsystem (100) nach einem der vorhergehenden Ansprüche, **dadurch gekennzeichnet, dass** die Transportvorrichtung (120) eine Pipettier-, Hebe- oder Greifvorrichtung ist.

4. Laborsystem (100) nach einem der vorhergehenden Ansprüche, **dadurch gekennzeichnet, dass** es eine Grundplatte (1) und eine Pipettiervorrichtung aufweist, die in x-, y- und z-Richtung über der Grundplatte (1) bewegbar ist.

5. Laborsystem (100) nach einem der vorhergehenden Ansprüche, **dadurch gekennzeichnet, dass**
die Beleuchtungsvorrichtung (20) mindestens eine Lichtquelle (21) aufweist und dazu eingerichtet ist, von der Lichtquelle (21) ausgesendetes Licht auf eine Mehrzahl von Teilstrahlen aufzuteilen, und
die Detektionsvorrichtung (30) eine Mehrzahl von Detektoreinheiten (31) aufweist und dazu eingerichtet ist, das Licht der Teilstrahlen pro Detektoreinheit (31) getrennt voneinander zu erfassen,
wobei die Beleuchtungsvorrichtung (20) und die Detektionsvorrichtung (30) den Probenbehälter (7) zur Untersuchung derart umgeben, dass der Probenbehälter (7) lichtdicht von der Umgebung abgeschirmt ist.

6. Laborsystem (100) nach einem der vorhergehenden Ansprüche, **dadurch gekennzeichnet, dass** zwischen Beleuchtungsvorrichtung (20) und Detektionsvorrichtung (30) ein Aufnahmeraum (25) ausgebildet ist, der dazu eingerichtet ist, den Probenbehälter (7), vorzugsweise passgenau, aufzunehmen.

7. Laborsystem (100) nach Anspruch 5 oder 6, **dadurch gekennzeichnet, dass** Oberteil (9a) und Unterteil (9b) der Transmissionsvorrichtung (9) zumindest abschnittsweise zueinander komplementäre Formen aufweisen, die beim Zusammensetzen eine Selbstzentrierung bewirken.

8. Laborsystem (100) nach einem der vorhergehenden Ansprüche, **dadurch gekennzeichnet, dass** es eine Steuereinrichtung aufweist, die dazu eingerichtet ist, das Positionieren des Probenbehälters (7) und der Komponenten der Transmissionsvorrichtung (9) mittels der Transportvorrichtung (120) automatisch zu steuern.

9. Laborsystem (100) nach einem der Ansprüche 4 bis 8, **dadurch gekennzeichnet, dass** die Grundplatte (1) im Wesentlichen rechteckig ist, an deren Stirnseiten jeweils eine Trägerstütze (4) angeordnet, deren freies Ende ein stangenartiger Träger (8) miteinander verbindet.

10. Verfahren zum automatisierten Verarbeiten von biologischen und/oder chemischen Proben (17) mit folgenden Schritten:
Bereitstellen eines Laborsystems (100) nach einem der vorhergehenden Ansprüche;
Öffnen der Transmissionsvorrichtung (9) mittels der Transportvorrichtung (120);
Anordnen des Probenbehälters (7), bevorzugt mittels der Transportvorrichtung (120), im Bereich der Messvorrichtung (9), so dass die Transmissionsvorrichtung (9) die Messung der biologischen und/oder chemischen Proben (17) durchführen kann,
Verschließen der Transmissionsvorrichtung (9), und
Durchführen der Messung der Proben (17) des Probenbehälters (7).

11. Verfahren nach Anspruch 10, wobei das Verfahren des Weiteren folgende Schritte umfasst:
Öffnen der Transmissionsvorrichtung (9) nach der Messung, bevorzugt mittels einer Greifvorrichtung (51, 52), und
Anordnen des Probenbehälters (7), bevorzugt mittels der Greifvorrichtung (51, 52), an einem vorbestimmten Ort des Laborsystems (100).

12. Verfahren nach Anspruch 10 oder 11, wobei das Durchführen der Messung folgende Schritte umfasst:
Erzeugen von Licht mittels der Lichtquelle (21) während eines ersten Zeitraums,
Aufteilen des emittierten Lichts in eine Mehrzahl von Teilstrahlengängen (28), die der Mehrzahl von Detektoreinheiten (31) der Detektionsvorrichtung (30) und der Anzahl von Proben (17) entspricht, und
separates und gleichzeitiges Erfassen des von jeder Probe transmittierten Lichts in jeder Detektoreinheit (31).

13. Verfahren nach einem der Ansprüche 10 bis 12, **dadurch gekennzeichnet, dass** das Licht in der Beleuchtungsvorrichtung (20) auf sechsundneunzig Teilstrahlengänge (28) aufgeteilt wird, und wobei während des ersten Zeitraums das Licht der sechsundneunzig Teilstrahlengänge durch sechsundneunzig Detektoreinheiten (31) separat gemessen wird.

14. Verfahren nach einem der Ansprüche 12 bis 13, **dadurch gekennzeichnet, dass** die während eines ersten Zeitraums gemessenen Lichtsignale eine Lichtmessung darstellen, wobei während eines zweiten Zeitraums kein Licht in die Mehrzahl von Teilstrahlengängen emittiert wird und die während des zweiten Zeitraums in den Detektoreinheiten (31) separat gemessenen Lichtmessungen eine Dunkelmessung darstellen, wobei für jede Detektoreinheit (31) die Dunkelmessung von der Lichtmessung subtrahiert wird.

15. Verfahren nach Anspruch 14, **dadurch gekennzeichnet, dass** mehrere Messzyklen durchlaufen werden, wobei in jedem Messzyklus wenigstens eine Lichtmessung und wenigstens eine Dunkelmessung durchgeführt und in einem Messzyklus von jeder gemessenen Lichtmessung die von derselben Detektoreinheit (31) gemessene Dunkelmessung subtrahiert wird.
